# EUROPEAN PATENT SPECIFICATION

(11) **EP 3 972 046 B1**
(45) Date of publication and mention of the grant of the patent: **08.04.2026**
(21) Application number: 21738120.1
(22) Date of filing: 05.01.2021
(51) Int. Cl.: H01M 50/572, H01M 50/24, H01M 50/502, H01R 13/52, H01M 50/20, H01M 10/658, H01M 50/258, H01M 50/503, H01R 4/30

(54) **BATTERY PACK WITH IMPROVED SAFETY**
BATTERIEPACK MIT ERHÖHTER SICHERHEIT
BLOC-BATTERIE À SÉCURITÉ AMÉLIORÉE

(30) Priority: 06.01.2020 KR 20200001345
(43) Date of publication of application: 23.03.2022
(73) Proprietor: LG Energy Solution, Ltd., Seoul 07335 (KR)
(72) Inventor: LEE, Tae Kyeong, Daejeon 34122 (KR); WON, Seong Yeon, Daejeon 34122 (KR); KANG, Yun Hyeok, Daejeon 34122 (KR)
(74) Representative: Plasseraud IP
(86) International application number: PCT/KR2021/000060
(87) International publication number: WO 2021/141345

(56) References cited:
- WO-A1-2019/156390
- JP-A- 2018 041 543
- JP-B2- 6 130 733
- KR-A- 20170 028 647
- KR-A- 20170 127 273
- KR-A- 20190 095 045
- KR-A- 20190 095 045
- KR-A- 20190 096 674
- US-A1- 2019 051 882

## Description

### [Technical Field]

The present invention relates to a battery pack with improved safety and a secondary battery including the same, and more particularly to a battery pack including two or more submodules, in each of which a plurality of unit cells, each of which includes an electrode assembly and an electrode lead protruding from the electrode assembly, is disposed, a pack case configured to receive the submodules, a busbar assembly including a busbar configured to electrically connect the electrode leads of the submodules to each other and a busbar frame connected to the busbar, a connection busbar configured to connect the submodules to each other, a terminal unit constituted by a cluster of electrode leads electrically connected to each other via the busbar, the terminal unit being connected to the connection busbar, and a blocking structure configured to wrap the terminal unit, the busbar assembly, and the upper end and the side surface of the connection busbar at the portion thereof connected to the terminal unit, and a secondary battery including the same.

### [Background Art]

With technological development of mobile devices, such as mobile phones, laptop computers, camcorders, and digital cameras, and an increase in demand therefor, research on secondary batteries, which are capable of being charged and discharged, has been actively conducted. In addition, secondary batteries, which are energy sources substituting for fossil fuels causing air pollution, have been applied to an electric vehicle (EV), a hybrid electric vehicle (HEV), and a plug-in hybrid electric vehicle (P-HEV), and therefore there is an increasing necessity for development of high-capacity, high-efficiency secondary batteries.

With an increase in demand for secondary batteries and necessity for high-capacity batteries, various attempts to increase the capacities of the secondary batteries have been made. Although there is a case in which the capacity of one battery cell is increased and used, a plurality of battery cells is electrically connected to each other so as to be used as a single battery in a general way. In general, it is preferable that a plurality of battery cells be electrically connected to each other in series or in parallel to form a battery module and a plurality of battery modules be received in a battery case so as to be used in the form of a battery pack.

For a high-capacity battery or a battery pack, however, it is difficult to cool the battery, compared to a single battery cell, whereby there is a higher danger of thermal runaway, fire, or explosion. In order to improve overall safety of the battery pack, therefore, a separate alarm system may be provided or a cooling or fire extinguishing construction may be added.

A separate member may be added to the battery pack or the structure of the battery pack may be changed in order to secure safety of the battery pack. However, this configuration is provided to prevent fire breakout in or abnormal operation of an abnormal battery module, and a configuration capable of preventing spread of fire to a module adjacent to an abnormal battery module to thus prevent transfer of thermal runaway is not considered.

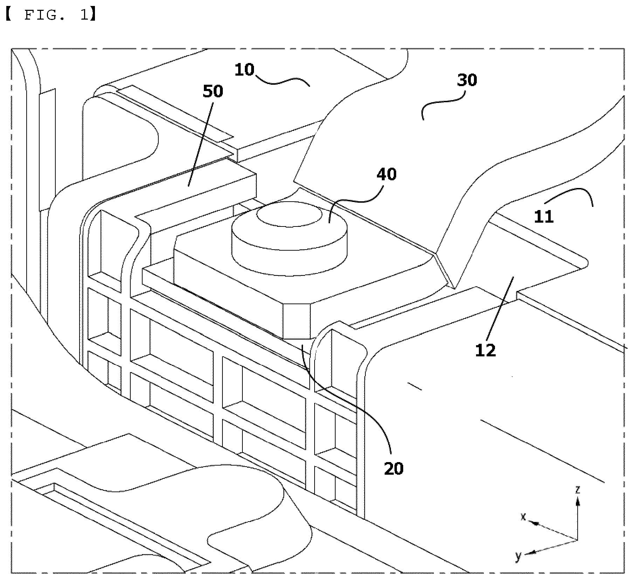

FIG. 1 is a perspective view of a conventional battery pack. The conventional battery pack includes two or more submodules 10, in each of which a plurality of unit cells is disposed, a terminal unit 20 constituted by a cluster of electrode leads of the submodule 10, and a connection busbar 30 configured to connect the submodules 10 to each other, wherein the terminal unit 20 and the connection busbar 30 are covered by a bolt cover 40 so as to be insulated.

The bolt cover 40, which is provided for insulation, only covers a portion of the terminal unit 20 and the connection busbar 30 connected thereto, in the form of a plate, or is provided in the form of a cap fitted to the terminal unit 20, as shown in FIG. 1.

However, the bolt cover 40 does not protect the terminal unit 20 and a busbar assembly 50 coupled to electrode leads of the submodule 10. Particularly, in the case in which fire breaks out in an adjacent module of the conventional battery pack of FIG. 1, heat may be transferred through a connection region between the terminal unit 20 and the connection busbar 30, which are exposed more than the other regions, whereby fire may easily occur in succession. In addition, a conductive pollutant discharged from a module damaged due to fire may permeate into the connection region between the terminal unit 20 and the connection busbar 30, whereby the submodule 10 may be damaged or open-circuited and thus fire may be caused.

From US 2019/051882 A1 there is known a battery pack comprising two or more submodules, each of the two or more submodules having a plurality of unit cells, each of the plurality of unit cells comprising an electrode assembly and an electrode lead protruding from the electrode assembly; a pack case configured to receive the submodules; a busbar assembly comprising a busbar configured to electrically connect the electrode leads of the submodules to each other and a busbar frame connected to the busbar; a connection busbar configured to connect the submodules to each other; a terminal unit, the terminal unit being electrically connected to the connection busbar and a blocking structure configured to wrap the terminal unit.

Patent Document 1 provides a terminal cover configured to protect an electrode terminal unit. However, this is provided for connection with an external device. In addition, the terminal cover of Patent Document 1 is configured in the form of a cap capable of covering only a terminal, and the cap is provided with only an O-ring for each attachment and detachment. However, a structure capable of protecting the electrode terminal unit from fire or a pollutant is not provided.

Patent Document 2 provides a terminal cover configured to protect an electrode terminal unit, wherein the terminal cover is made of a soft material that can be elastically deformed. However, the terminal cover is not a structure capable of protecting the terminal unit from fire or a pollutant. In addition, the terminal cover is a construction configured to protect a terminal outside a battery pack but is not a construction configured to protect a connection portion between battery modules.

Therefore, there is a need for a construction capable of preventing transfer of thermal runaway between submodules in a battery pack and protecting a battery module from the outside.

### - Prior Art Documents -

### - Patent Documents -

(Patent Document 1) Korean Patent Application Publication No. 2018-0058552
(Patent Document 2) Korean Patent Application Publication No. 2019-0088675
(Patent Document 3) US2019/051882 A1
(Patent Document 4) KR2017 0028647 A
(Patent Document 5) WO2019/156390 A1
(Patent Document 6) KR2019 0095045 A

### [Disclosure]

### [Technical Problem]

The present invention has been made in view of the above problems, and it is an object of the present invention to protect submodules by wrapping an exposed region of each submodule using a blocking structure configured to protect a terminal unit of the submodule, a connection busbar configured to electrically connect the submodules to each other, and a busbar assembly.

It is another object of the present invention to prevent an adjacent submodule from being affected when a specific submodule is abnormal by manufacturing the blocking structure using a material that exhibits heat resistance and chemical resistance.

It is a further object of the present invention to prevent the occurrence of fire or explosion in succession by protecting each submodule, thereby preventing pecuniary and non-pecuniary losses.

### [Technical Solution]

In order to accomplish the above objects, a battery pack according to the indepenedent claim 1 includes two or more submodules, each of the two or more submodules having a plurality of unit cells, each of the plurality of unit cells comprising an electrode assembly and an electrode lead protruding from the electrode assembly, a pack case configured to receive the submodules, a busbar assembly including a busbar configured to electrically connect the electrode leads of the submodules to each other and a busbar frame connected to the busbar, a connection busbar configured to connect the submodules to each other, a terminal unit comprising a cluster of the electrode leads electrically connected to each other via the busbar, the terminal unit being connected to the connection busbar, and a blocking structure configured to wrap the terminal unit, the busbar assembly, and the upper end and the side surface of the connection busbar at the portion thereof connected to the terminal unit.

The blocking structure may be made of an insulation material that exhibits chemical resistance and thermal insulation.

The insulation material may include silicate.

The insulation material may include mica or ceramics.

The blocking structure may include an upper structure configured to have a shape corresponding to the busbar assembly, the upper structure being located at the upper end of the busbar assembly, a terminal protecting portion protruding from the upper structure so as to have a shape corresponding to the terminal unit and the connection busbar, a side structure configured to further protect a different submodule facing portion of the busbar frame, and a pollutant permeation preventing portion located at the lower part of the upper structure, the pollutant permeation preventing portion being configured to protect opposite side surfaces of the terminal unit and opposite side surfaces of the connection busbar.

The pollutant permeation preventing portion may be coupled to a space between the busbar and the terminal unit and the connection busbar connected thereto.

The blocking structure may further include a thermal insulation cover configured to protect the blocking structure.

The thermal insulation cover may include an upper end cover provided at the upper part of the battery pack at which the busbar assembly and the blocking structure are located and a side cover provided at a different submodule facing portion of the busbar assembly.

The thermal insulation cover may be made of a thermal insulation material.

The thermal insulation material may include silicate.

The thermal insulation material may include mica or ceramics.

The thermal insulation cover may be configured to cover the entirety of the connection busbar.

The thermal insulation cover may further includes a rear cover provided parallel to the side cover, the rear cover being configured to protect the connection busbar and the rear surface of the blocking structure.

In addition, the present invention includes a device using the battery pack as an energy source.

The device may be any one selected from a group consisting of a mobile phone, a tablet computer, a laptop computer, a power tool, a wearable electronic device, an electric vehicle, a hybrid electric vehicle, a plug-in hybrid electric vehicle, and an energy storage system.

In the present invention, one or more constructions that do not conflict with each other may be selected and combined from among the above constructions.

### [Description of Drawings]

FIG. 1 is a perspective view of a conventional battery pack.
FIG. 2 is a perspective view of a battery pack according to a first preferred embodiment of the present invention.
FIG. 3 is a perspective view of a blocking structure according to the first preferred embodiment of the present invention when viewed from the rear.
FIG. 4 is a front view of the blocking structure according to the first preferred embodiment of the present invention.
FIG. 5 is a side view of the blocking structure according to the first preferred embodiment of the present invention.
FIG. 6 is a perspective view of a battery pack according to a second preferred embodiment of the present invention.
FIG. 7 is a perspective view of a thermal insulation cover provided in a battery pack according to a third preferred embodiment of the present invention.
FIG. 8 is a perspective view of the battery pack according to the third preferred embodiment of the present invention before coupling.
FIG. 9 is a perspective view of the battery pack according to the third preferred embodiment of the present invention after coupling.
FIG. 10 is a view showing a modification of the third preferred embodiment of the present invention.
FIG. 11 is a resistance measurement graph of the battery pack according to the second preferred embodiment of the present invention and Comparative Example.
FIG. 12 is a schematic view showing the dispositions of submodules for resistance measurement in the battery pack according to the second preferred embodiment of the present invention and Comparative Example.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery pack including a blocking structure according to the present invention and a secondary battery including the same will be described with reference to the accompanying drawings. The invention is defined in the appended claims.

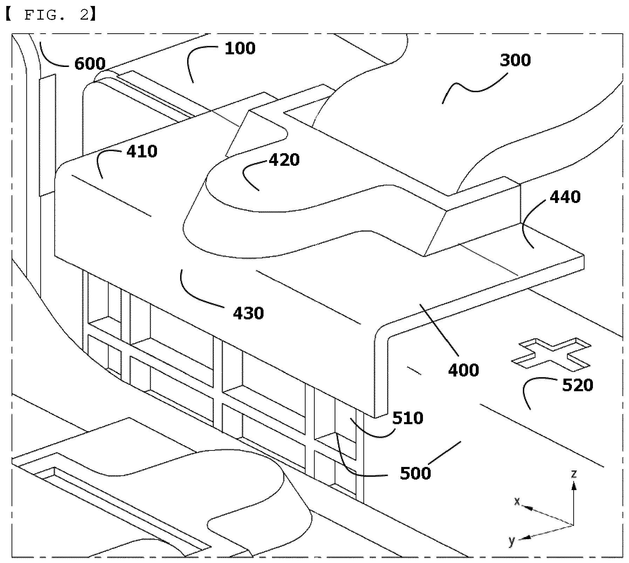

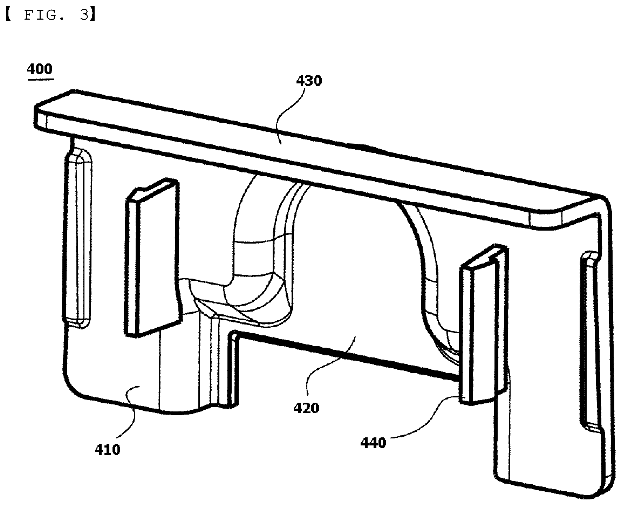

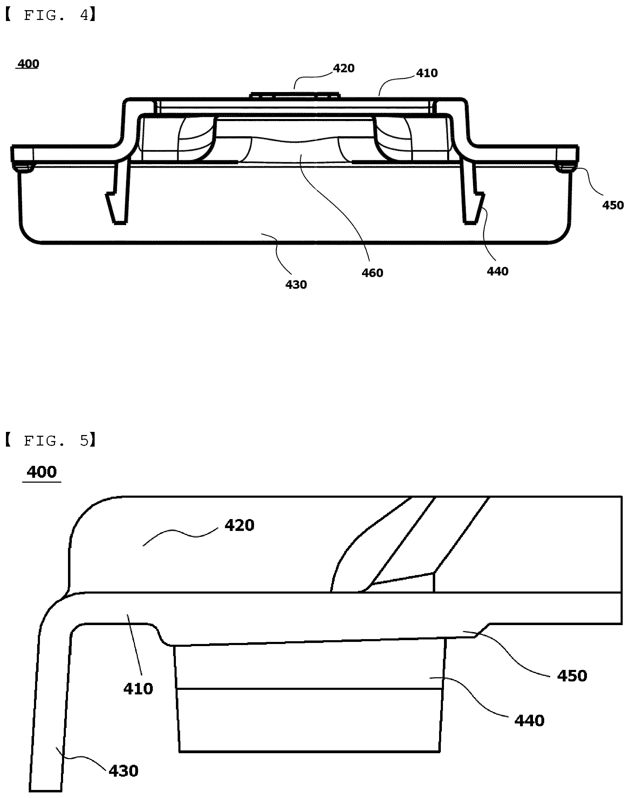

FIG. 2 is a perspective view of a battery pack according to a first preferred embodiment of the present invention, FIG. 3 is a perspective view of a blocking structure according to the first preferred embodiment of the present invention when viewed from the rear, FIG. 4 is a front view of the blocking structure according to the first preferred embodiment of the present invention, and FIG. 5 is a side view of the blocking structure according to the first preferred embodiment of the present invention.

Referring to FIG. 2, the battery pack according to the first preferred embodiment of the present invention includes two or more submodules 100, in each of which a plurality of unit cells, each of which includes an electrode assembly and an electrode lead protruding from the electrode assembly, is disposed, a pack case 600 configured to receive the submodules, a busbar assembly 500 including a busbar 510 configured to electrically connect the electrode leads of the submodules to each other and a busbar frame 520 connected to the busbar, a connection busbar 300 configured to connect the submodules to each other, a terminal unit constituted by a cluster of electrode leads electrically connected to each other via the busbar, the terminal unit being connected to the connection busbar, and a blocking structure 400 including a busbar frame cover configured to fix the busbar frame, the blocking structure being configured to wrap the terminal unit, the busbar assembly 500, and the upper end and the side surface of the connection busbar at the portion thereof connected to the terminal unit.

In each of the submodules 100, a plurality of unit cells, each of which includes an electrode assembly and an electrode lead protruding from the electrode assembly, is disposed.

The electrode assembly may be a jelly-roll type electrode assembly, which is configured to have a structure in which a long sheet type positive electrode and a long sheet type negative electrode are wound in the state in which a separator is interposed between the positive electrode and the negative electrode, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other. However, the present invention is not limited thereto.

The electrode assembly is mounted in the pack case 600. An inner layer and an outer layer of the pack case 600 may be made of different materials, although the layers may generally be made of the same material. The inner layer, which directly contacts the electrode assembly, must exhibit high insulation properties and high resistance to an electrolytic solution. In addition, the inner layer must exhibit high sealability in order to hermetically seal the pack case from the outside, i.e. a thermally-bonded sealed portion between inner layers must exhibit excellent thermal bonding strength. The inner layer may be made of a material selected from among a polyolefin-based resin, such as polypropylene, polyethylene, polyethylene-acrylic acid, or polybutylene, a polyurethane resin, and a polyimide resin, which exhibit excellent chemical resistance and high sealability. However, the present invention is not limited thereto. Specifically, polypropylene, which exhibits excellent mechanical-physical properties, such as tensile strength, rigidity, surface hardness, and resistance to impact strength, and excellent chemical resistance, may be used.

The outer layer may be made of a heat-resistant polymer that exhibits excellent tensile strength, resistance to moisture permeation, and resistance to air transmission such that the outer layer exhibits high heat resistance and chemical resistance while protecting the electrode assembly. As an example, the outer layer may be made of nylon or polyethylene terephthalate. However, the present invention is not limited thereto.

Meanwhile, electrode leads constituted by a positive electrode lead and a negative electrode lead may be exposed out of the pack case after being electrically connected to a positive electrode tab and a negative electrode tab of the electrode assembly, respectively, or the electrode leads may directly connect the electrode assembly to the outside of the pack case without a positive electrode tab and a negative electrode tab. However, the present invention is not limited thereto. At this time, the portion of the cluster of electrode leads exposed out of the pack case is referred to as a terminal unit (not shown in FIG. 2; see FIG. 1). The terminal unit (not shown in FIG. 2; see FIG. 1) is connected to the connection busbar 300, which is configured to electrically connect the submodules to each other. The battery cell described above corresponds to a generally known construction, and therefore a more detailed description thereof will be omitted.

The submodule 100 means a component formed as the result of a plurality of unit cells, each of which includes an electrode assembly and an electrode lead extending from the electrode assembly, being stacked side by side in a horizontal or vertical direction in order to satisfy the capacity or output of the battery pack.

A plurality of submodules 100 is received in the pack case 600 in the state of being aligned side by side.

The busbar assembly 500 is configured to fix unit cells constituting the submodule 100 to the pack case 600 while connecting the unit cells to each other in series or in parallel. The busbar assembly includes one or more busbar frames 520, one or more busbars 510, and a connection busbar 300.

A positive electrode lead or a negative electrode lead extending from the electrode assembly of each unit cell extends through the busbar 510 and is then bent. Subsequently, the positive electrode lead or the negative electrode lead is fixed to the outer surface of the busbar 510 using a known fixing method, such as laser welding or resistance welding.

A connection busbar 300 bent so as to have a predetermined shape is provided between adjacent submodules 100 in order to connect the submodules 100 in series. In the same manner as the busbar 510, the connection busbar connects the busbars 510 to each other through a known fixing means.

As can be seen from FIG. 2, the battery pack according to the present invention includes a blocking structure 400 configured to wrap the terminal unit, the busbar assembly 500, and the upper end and the side surface of the connection busbar 300.

As shown in FIGS. 2 to 5, the blocking structure 400 may include an upper structure 410 configured to have a shape corresponding to the busbar assembly, the upper structure being located at the upper end of the busbar assembly, a terminal protecting portion 420 protruding from the upper structure so as to have a shape corresponding to the terminal unit and the connection busbar, a side structure 430 configured to further protect a different submodule facing portion of the busbar frame 520, and a pollutant permeation preventing portion 440 located at the lower part of the upper structure 410, the pollutant permeation preventing portion being configured to protect opposite side surfaces of the terminal unit and opposite side surfaces of the connection busbar 300.

The upper structure 410 is located at the upper end of the busbar assembly 500 in order to protect the busbar 510 and the busbar frame 520. To this end, the upper part of the upper structure 410 is configured to have a plate shape so as to be easily coupled to another component of the battery pack, such as an insulation cover or a cooling plate.

In addition, the lower part of the upper structure 410 has a shape corresponding to the upper end of the busbar 510 and the upper end of the busbar frame 520. In addition, a separate fixing portion configured to fix the upper structure 410 may be provided at the busbar 510 and the busbar frame 520.

Since the upper structure 410 has the above shape, it is possible to prevent the upper part of the busbar 510 and the upper part of the busbar frame 520 from being exposed to the outside.

The blocking structure 400 may include a terminal protecting portion 420 protruding so as to have a shape corresponding to the terminal unit and the connection busbar 300. The terminal protecting portion 420 has a shape that wraps the terminal unit and the upper end portion and the side surface of the connection busbar 300 connected to the terminal unit. The terminal protecting portion 420 protrudes so as to have a shape corresponding to the terminal unit and the connection busbar 300, whereby the protruding portion of the terminal protecting portion is minimized. As a result, the size of the battery module is decreased, whereby the overall capacity of the battery pack is increased.

The terminal protecting portion 420 is formed so as to wrap the portion connected to the terminal unit and the portion of the connection busbar 300 provided at the connection busbar receiving portion 12 of the cartridge 11 shown in FIG. 1.

The side structure 430 protects the different submodule facing portion of the busbar frame 520. The busbar frame facing portion of the side structure 430 is formed so as to have a shape corresponding to the shape of the busbar frame 520 and the busbar 510. Preferably, the different submodule facing portion of the side structure 430 has a plate shape so as to allow a different member to be coupled thereto or not to hinder a different member. This shape may be changed depending on the shape of the battery pack or the battery module.

Although the side structure 430 may be configured to protect the entirety or a portion of each of the busbar 510 and the busbar frame 520, it is preferable that the side structure have a length capable of protecting the connection portion between the busbar 510 and the electrode lead. Also, in the case in which each of the busbar and the busbar frame is made of a plastic material that has low resistance to heat or a chemical material, it is preferable that the side structure protect the entirety of the plastic material portion of each of the busbar and the busbar frame.

The pollutant permeation preventing portion 440 protects opposite side surfaces of the terminal unit and opposite side surfaces of the connection busbar 300. The pollutant permeation preventing portion 440 protects empty spaces formed in the terminal unit 20 provided at opposite side surfaces of the coupling point between terminal unit and the connection busbar 30 shown in FIG. 1.

The pollutant permeation preventing portion 440 may be coupled to a space between the busbar and the terminal unit and the connection busbar connected thereto. To this end, the pollutant permeation preventing portion 440 according to the present invention may extend downwards from the upper structure 410, as shown in FIG. 3. In addition, the pollutant permeation preventing portion 440 may be provided with a protrusion protruding in a direction toward a non-facing portion of the terminal unit in order to fix the blocking structure 400 while preventing permeation of a pollutant.

As shown in FIG. 4, the upper part of the protrusion of the pollutant permeation preventing portion 440 may have a right triangular shape disposed in parallel to the upper structure. When a pollutant permeates inside, the pollutant moves to an unexposed region, since the upper part of the protrusion is disposed in parallel to the upper structure.

As shown in FIG. 5, the protrusion may have a length equivalent to 0.1 to 0.7 times the length of the pollutant permeation preventing portion 440. In the case in which the length of the protrusion is too small, the protrusion may not fix the pollutant permeation preventing portion 440 and may be damaged even by small movement thereof. In the case in which the length of the protrusion is too large, the size of the pollutant permeation preventing portion 440 may be excessively increased, whereby the battery shape or battery size for the battery output or capacity may be limited.

As shown in FIG. 5, the pollutant permeation preventing portion 440 may be configured to have a shape that is not connected to the side structure 430. The reason for this is that a protrusion of the busbar 510 is introduced into a space between the side structure 430 and the pollutant permeation preventing portion 440, whereby the blocking structure 400 can be fixed to the busbar assembly 500.

As shown in FIGS. 3 to 5, the blocking structure 400 according to the present invention may further include a fixing portion 450 provided at each side surface of the lower part of the upper structure 410. The fixing portion 450 serves to fix the blocking structure 400 to the busbar assembly 500 or to support the blocking structure 400.

As shown in FIG. 5, a different module facing portion of the fixing portion 450 may be longer, and the fixing portion may be shorter with approaching the connection busbar 300 of a module that is connected thereto. This structure is a structure in which the blocking structure 400 is disposed so as to prevent movement of flames generated in a different module.

As can be seen from FIG. 4, the fixing portion 450 is shorter than the pollutant permeation preventing portion 440. The reason for this is that the fixing portion 450 is not coupled to a depressed portion of the busbar assembly 500, unlike the pollutant permeation preventing portion 440, and therefore it is not necessary for the fixing portion to be deeply provided. Also, in the case in which the fixing portion 450 is excessively long, the volume of the blocking structure 400 occupied in the battery pack is excessively increased, which is ineffective, whereby a flame prevention effect may be reduced.

As shown in FIGS. 3 and 4, the blocking structure 400 according to the present invention may further include a connection busbar receiving portion 460 configured to receive the connection busbar 300. The upper structure 410 wraps the connection busbar receiving portion 460, i.e. a space configured to receive the connection busbar. The connection busbar receiving portion 460 is formed so as to have a size equal to the size of the connection busbar 300. When the connection busbar 300 is coupled, therefore, it is possible to prevent permeation of foreign matter.

The blocking structure 400 may be made of an insulation material that exhibits chemical resistance and thermal insulation in order to prevent the submodule 100 from being damaged by fire in an adjacent submodule or a pollutant. Any material that can be used in a battery may be used as the insulation material that exhibits chemical resistance and thermal insulation. In consideration of use of the battery pack, however, a material that is light and generates no toxic substance is preferably used.

As an example of the material, a compound including silicon may be used. Examples of the compound including silicon may include mica and ceramics. In addition, nylon or polyethylene terephthalate, which is a heat-resistant polymer, may be coated so as not to react with a chemical material in order to be used as the material for the blocking structure 400.

Although the blocking structure 400 may be made of a single material, different materials may be used depending on the respective facing portions thereof. As an example, the submodule facing portion of the blocking structure may be made of a material that exhibits higher chemical resistance, and the different submodule facing portion of the blocking structure and the upper part of the submodule may be made of a material that exhibits higher heat resistance.

In addition, although the blocking structure 400 may be configured to have a single plate, the blocking structure may be configured to have two or more layers. Preferably, however, the blocking structure 400 is configured to have a single plate in order to prevent the thickness of the blocking structure 400 from being excessively increased. In the case in which the blocking structure 400 has two or more plates, the blocking structure may be configured to have a structure in which a honeycomb-shaped core is formed between the plates, like a fire wall. In addition, a thermal insulation material may be provided between the plates. For example, a mineral board, C.F.B, a ceramic fiber hard board, or Super H.T.B may be used as the thermal insulation material.

It is preferable that the blocking structure have a thickness capable of protecting the submodule 100 from flames and a pollutant. Although the thickness of the blocking structure may be changed depending on the thickness or capacity of the submodule or the battery pack, it is preferable that the thickness of the blocking structure be between 0.2 mm and 50 mm. In the case in which the thickness of the blocking structure is less than 0.2 mm, the blocking structure may not protect the submodule 100 from a pollutant and flames. In the case in which the thickness of the blocking structure is greater than 50 mm, the size of the submodule 100 may be increased, whereby the density and capacity of the battery pack may be reduced.

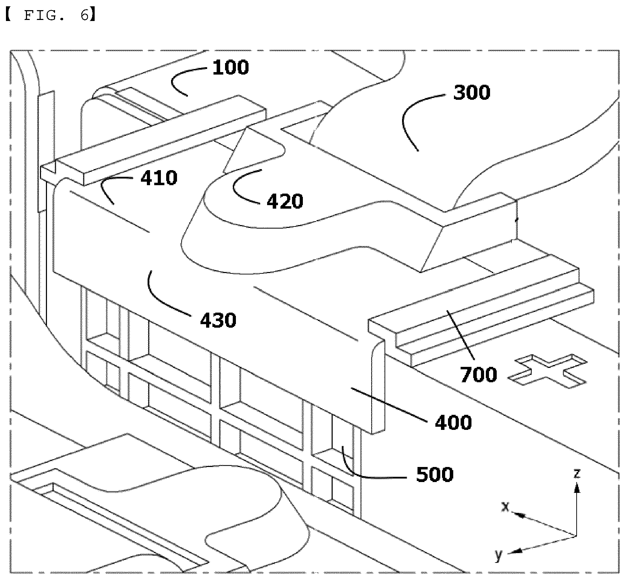

FIG. 6 is a perspective view of a battery pack according to a second preferred embodiment of the present invention.

The battery pack according to the second preferred embodiment of the present invention may further include a side protecting portion 700 provided at each of opposite side portions of the upper structure 410 of the blocking structure 400 of the battery pack according to the first embodiment.

The side protecting portion 700 may be configured to protect not only the upper structure 410 but also the side surface of the pollutant permeation preventing portion 440, as shown in FIG. 6. In addition, although the side protecting portion 700 is provided at the upper end of the upper structure 410, as shown in FIG. 6, the side protecting portion 700 may be provided at the lower part of the upper structure. In addition, although the side protecting portion may be provided as a separate member, as shown in FIG. 6, the side protecting portion may be integrally formed with the blocking structure 400.

The battery pack according to the present invention may further include a thermal insulation cover 800.

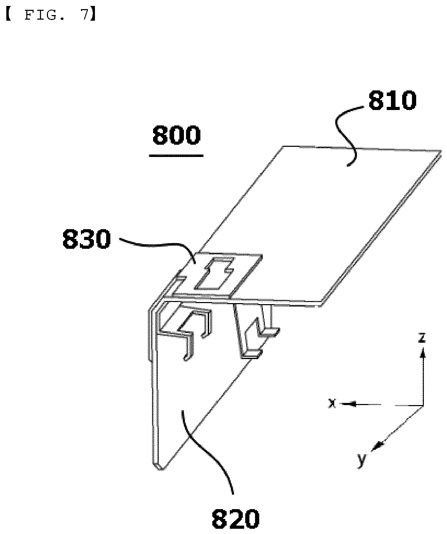

FIG. 7 is a perspective view of a thermal insulation cover 800 provided in a battery pack according to a third preferred embodiment of the present invention. The thermal insulation cover 800 is configured to protect the blocking structure 400. Of course, a structure configured to protect a general terminal cover without the blocking structure 400 is also possible.

The thermal insulation cover 800 may include an upper end cover 810 provided at the upper part of the battery pack at which the busbar assembly 500 and the blocking structure 400 are located and a side cover 820 provided at a different submodule facing portion of the busbar assembly 500. The thermal insulation cover 800 may further include a fastening device 830 configured to couple the thermal insulation cover 800 to the busbar assembly and the submodule 100. The fastening device 830 may be fitted onto the thermal insulation cover 800 in the form of a clip so as to be fixed thereto or may be formed as a portion of the thermal insulation cover 800.

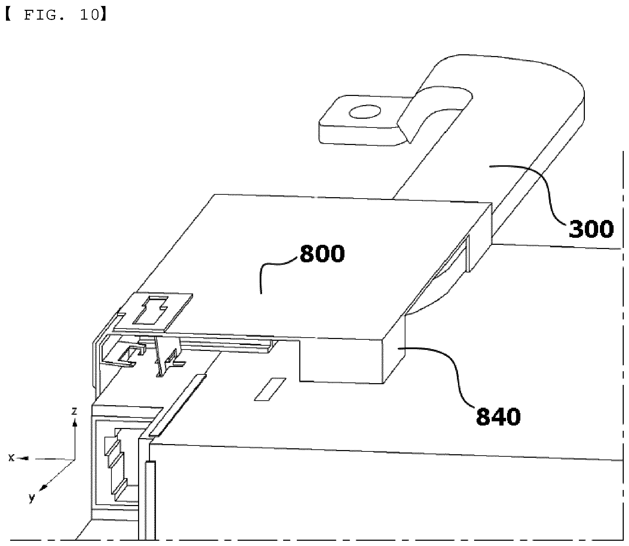

The upper part of the upper end cover 810 is configured to have a flat plate shape, and the lower part of the upper end cover is configured to have a shape corresponding to a coupling region. In general, the upper end cover is preferably formed so as to have a plate shape. It is preferable that the size of the upper end cover 810 be a size capable of covering the blocking structure. That is, the size of the upper end cover may be a size capable of including the upper end of the busbar assembly 500 from the side surface of the different module facing portion of the submodule 100 according to the present invention and reaching the surface of the connection busbar 300. In addition, as shown in FIG. 10, the thermal insulation cover 800 according to the present invention may cover the entirety of the connection busbar 300 provided at the upper end of the submodule 100, or may cover only a portion of the connection busbar 300. This configuration is capable of preventing the occurrence of fire or heat due to fire back to an ignition point thereof.

The upper part of the side cover 820 is configured to have a flat plate shape, in the same manner as the upper part of the upper end cover 810, and the lower part of the side cover is configured to have a shape corresponding to a coupling region. The size of the side cover 820 may be equal to or greater than the size of the side structure 430 of the blocking structure 400. The blocking structure 400 may have a size capable of protecting the busbar assembly 500 and the electrode terminals of the submodule 100.

The fastening device 830 may be provided at each of opposite side surfaces of the thermal insulation cover 800 in order to fix the thermal insulation cover 800 to the busbar assembly and the submodule 100. The position of the fastening device 830 is not restricted as long as the thermal insulation cover 800 is not separated by impact, fire, or explosion.

Although the shape of the fastening device 830 is not restricted as long as it is possible to increase fastening force, the fastening device may be provided at the connection portion between the upper end cover 810 and the side cover 820 of the thermal insulation cover 800 in order to fix both the upper end cover 810 and the side cover 820 to the busbar assembly and the submodule 100 or to fix the side cover 820. In addition, the upper end cover may be provided with only a predetermined catching portion, and the side cover may be provided with a fixing portion configured not to be detachable when fixed. This is based on gravity applied to the upper end cover 810, and may be changed depending on the position of the submodule and the position of the thermal insulation cover 800.

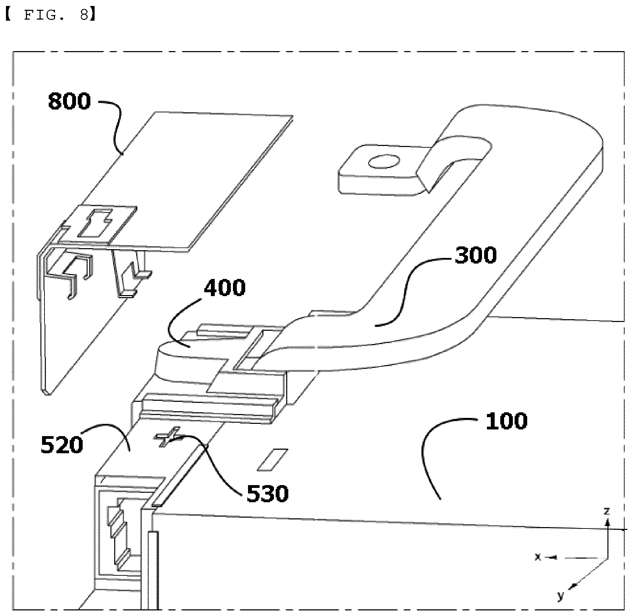

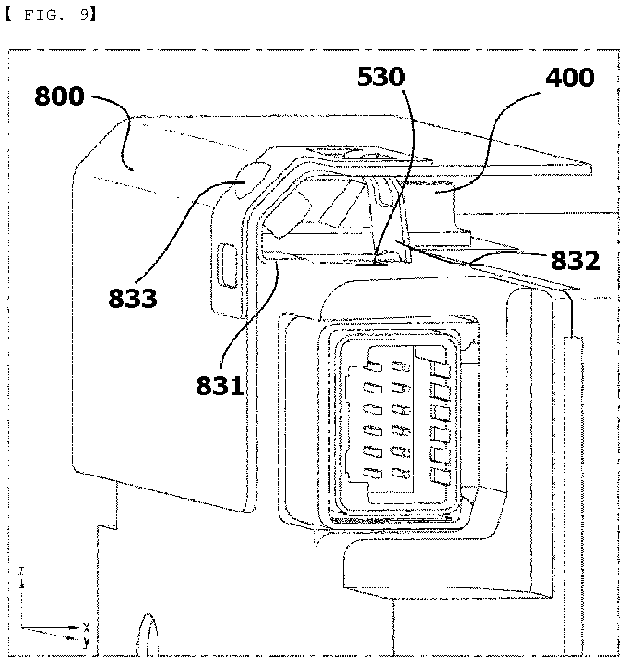

FIG. 8 is a perspective view of the battery pack according to the third preferred embodiment of the present invention before coupling, and FIG. 9 is a perspective view of the battery pack according to the third preferred embodiment of the present invention after coupling.

As can be seen from FIGS. 8 and 9, the fastening device 830 according to the present invention may be coupled to a coupling portion 530 provided at the upper end of the busbar assembly 500. As an example of the fastening device, as shown in FIG. 9, a side fastening device 831 configured to fix the side cover 820 and an upper end fastening device 832 configured to fix the upper end cover 810 are fixed by a single fastening device fixing portion 833, and the side fastening device 831 and the upper end fastening device 832 are coupled to the coupling portion 530 provided at the upper end or the upper end and side surface of the busbar assembly so as to be fixed to the battery pack.

Although the fastening device 830 may be located at one side surface of the thermal insulation cover 800 adjacent to the side edge thereof, it is preferable that the fastening device be provided at each of opposite side surfaces of the thermal insulation cover 800 in order to increase fixing force.

The thermal insulation cover 800 may be coupled to a thermal insulation cover coupling portion provided at the busbar assembly 500. In the case in which a busbar frame cover configured to fix the busbar assembly 500 is provided, the thermal insulation cover coupling portion may be provided at the busbar frame cover. The thermal insulation cover coupling portion may be configured to have a shape corresponding to the fastening device 830.

Although the thermal insulation cover 800 may have the above shape, the shape of the thermal insulation cover is not restricted as long as it is possible to protect the blocking structure 400.

It is preferable that the thermal insulation cover 800 be made of a thermal insulation material.

The reason for this is that it is necessary to block the transfer of heat due to fire breakout. In addition, the thermal insulation material may exhibit chemical resistance.

Since the thermal insulation cover 800 is made of a material that exhibits chemical resistance and thermal insulation, the thermal insulation cover 800 may primarily protect the submodule 100, and the blocking structure 400 may secondarily protect the submodule, whereby it is possible to further protect the submodule 100.

Any material that can be used in a battery may be used as the thermal insulation material. In consideration of use of the battery pack, however, a material that has predetermined strength and generates no toxic substance is preferably used.

As an example of the material, a compound including silicon may be used. Examples of the compound including silicon may include mica and ceramics. In addition, nylon or polyethylene terephthalate, which is a heat-resistant polymer, may be coated so as not to react with a chemical material in order to be used as the material for the thermal insulation cover 800.

In the third preferred embodiment of the present invention, the thermal insulation cover 800 of FIG. 8 has a shape coupled so as to wrap the upper end and the side portion of the submodule 100.

Although the fastening device 830 of the thermal insulation cover 800 may have a separate thermal insulation cover coupling portion, a space of the coupling portion 530 for coupling of the busbar assembly provided at the coupling portion of the busbar assembly 500 may be used.

The fastening device 830 may be coupled to a space provided in a recessed portion of the coupling portion 530, or may be coupled in a form inserted therein, in order to fix the thermal insulation cover 800.

FIG. 10 is a view showing a modification of the third preferred embodiment of the present invention.

The modification of the third preferred embodiment of the present invention may have a shape in which the thermal insulation cover 800 covers the entirety of the connection busbar 300 provided at the upper part of the submodule 100 or may have a shape in which the thermal insulation cover covers only a portion of the connection busbar 300. As described above, fire tends to spread while returning to an ignition point thereof when fire breaks out. For this reason, the thermal insulation cover may cover the entirety of the connection busbar 300 in order to protect the connection busbar 300 and to prevent spread of fire.

Also, in order to prevent spread of fire due to fire back, the thermal insulation cover 800 according to the present invention may further include a rear cover 840 provided parallel to the side cover 820, the rear cover being configured to protect the connection busbar 300 and the rear surface of the blocking structure 400. The rear cover 840 may be configured to have a shape that protects a portion that is not protected by the connection busbar 300, as shown in FIG. 10, or may have a long plate shape configured to protect the connection busbar 300. In addition, the rear cover 840 according to the present invention may have a structure configured to also protect a side surface portion of the blocking structure adjacent to the rear surface thereof, as shown in FIG. 10. This structure is a structure prepared for the case in which some of fire is separated from the main current of fire and returns back.

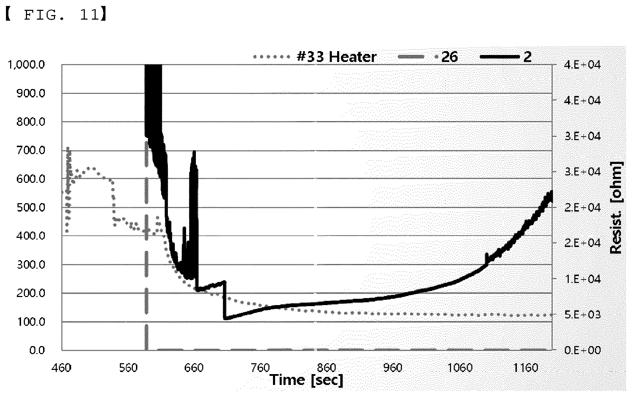

Resistance values between a terminal portion and a mono frame in Example (2) to which the blocking structure according to the second embodiment of the present invention and the thermal insulation cover are applied and Comparative Example (26) in which only the thermal insulation cover is provided without the blocking structure according to the present invention are shown in the graph of FIG. 11. Model JH4 submodules sold by LG Chem were used as submodules, and mica was used as the material for the blocking structure according to the present invention and the thermal insulation cover.

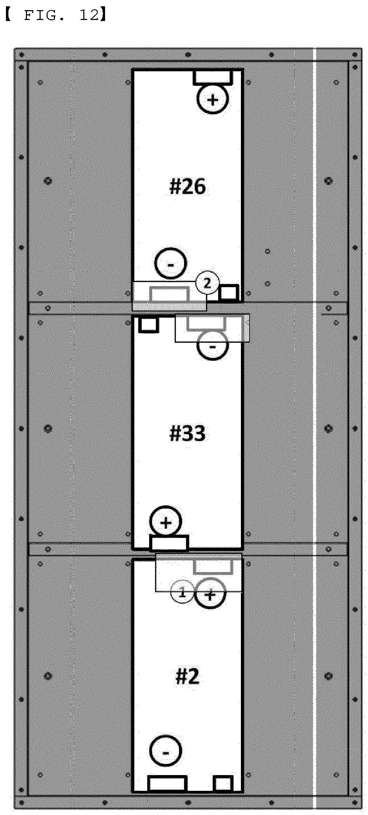

A submodule of Example (2) and a submodule of Comparative Example (26) were disposed at opposite side surfaces of a trigger submodule (#33), and fire was set to the trigger submodule (#33). FIG. 12 is a schematic view showing the dispositions of submodules for resistance measurement in the battery pack according to the second preferred embodiment of the present invention and Comparative Example. At this time, resistance values between the terminal unit and the submodule indicated by part 1 and part 2 in FIG. 12 were measured as the resistance values. As shown in FIG. 11, it can be seen that Example (2) of the submodule according to the present invention was not affected by fire, and therefore a resistance value of 5.E+03 Ω or more was maintained, whereas the submodule according to Comparative Example was affected a predetermined time (560 seconds) after fire broke out in an adjacent module, whereby the resistance of the submodule converged upon 0. In the case in which the blocking structure according to the present invention is provided, therefore, it can be seen that a predetermined resistance value, i.e. 3000 Ω or more, is maintained, whereby electrical conduction due to fire breakout does not occur and thus fire transfer due to overcurrent does not occur.

In the present invention, a connector or a fuse may be provided between the modules in order to prevent fire transfer due to overcurrent.

The present invention may provide a device using any one of the battery packs described above as an energy source.

The device may be any one selected from the group consisting of a mobile phone, a tablet computer, a laptop computer, a power tool, a wearable electronic device, an electric vehicle, a hybrid electric vehicle, a plug-in hybrid electric vehicle, and an energy storage system.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the scope of the appended claims.

### - Description of Reference Numerals -

- 10, 100:: Submodules
- 11:: Cartridge
- 12:: Connection busbar receiving portion
- 20:: Terminal unit
- 30, 300:: Connection busbars
- 40:: Bolt cover
- 400:: Blocking structure
- 410:: Upper structure
- 420:: Terminal protecting portion
- 430:: Side structure
- 440:: Pollutant permeation preventing portion
- 450:: Fixing portion
- 460:: Connection busbar receiving portion
- 50, 500:: Busbar assemblies
- 510:: Busbar
- 520:: Busbar frame
- 530:: Coupling portion
- 600:: Pack case
- 700:: Side protecting portion
- 800:: Thermal insulation cover
- 810:: Upper end cover
- 820:: Side cover
- 830:: Fastening device
- 831:: Side fastening device
- 832:: Upper end fastening device
- 833:: Fastening device fixing portion
- 840:: Rear cover

### [Industrial Applicability]

A battery pack according to the present invention includes a blocking structure configured to wrap a terminal unit, a busbar assembly, and a connection busbar of a submodule, whereby it is possible to protect an exposed region of the submodule while preventing movement of current from a connection region between the terminal unit and the connection busbar to a different region, and therefore it is possible to prevent continuous damage to submodules due to an adjacent submodule.

The blocking structure is made of a material that exhibits chemical resistance and thermal insulation, whereby it is possible to prevent the terminal unit and the connection busbar from being polluted by a pollutant generated as the result of damage to an adjacent submodule. In addition, when fire breaks out in an adjacent submodule, it is possible to immediately prevent spread of fire using a thermal insulation material and to prevent heat to a predetermined extent, whereby it is possible to protect the submodule. As a result, it is possible to secure a time necessary to operate a fire extinguishing system in the battery pack or to warn a user, whereby it is possible to prevent further damage to the battery pack.

In addition, it is possible to improve overall safety of a battery through a simple construction, such as the provision of a pollutant permeation preventing portion at the side surface portion of the blocking structure or the provision of a thermal insulation cover in addition to the blocking structure.

## Claims

1. A battery pack comprising:
two or more submodules (100), each of the two or more submodules (100) having a plurality of unit cells, each of the plurality of unit cells comprising an electrode assembly and an electrode lead protruding from the electrode assembly;
a pack case (600) configured to receive the submodules (100);
a busbar assembly (500) comprising a busbar (510) configured to electrically connect the electrode leads of the submodules (100) to each other and a busbar frame (520) connected to the busbar (510);
a connection busbar (300) configured to connect the submodules (100) to each other;
a terminal unit (20) comprising a cluster of the electrode leads electrically connected to each other via the busbar (510), the terminal unit (20) being defined as the portion of the cluster of electrode leads which are exposed out of the pack case (600), the terminal unit (20) being electrically connected to the connection busbar (300);
a blocking structure (400) configured to wrap the terminal unit (20), at least a portion of the busbar assembly (500), and an upper end and a side surface of the connection busbar (300) at a portion thereof connected to the terminal unit (20), and
a thermal insulation cover (800) configured to protect the blocking structure (400).

2. The battery pack according to claim 1, wherein the blocking structure (400) comprises an insulation material that exhibits chemical resistance and thermal insulation.

3. The battery pack according to claim 2, wherein the insulation material comprises silicate.

4. The battery pack according to claim 3, wherein the insulation material comprises mica or ceramics.

5. The battery pack according to claim 1, wherein the blocking structure (400) comprises:
an upper structure (410) configured to have a shape corresponding to the busbar assembly (500), the upper structure (410) being located at an upper end of the busbar assembly (500);
a terminal protecting portion (420) protruding from the upper structure (410) so as to have a shape corresponding to the terminal unit (20) and the connection busbar (300);
a side structure (430) configured to further protect a different submodule (100) facing portion of the busbar frame (520); and
a pollutant permeation preventing portion (440) located at a lower part of the upper structure (410), the pollutant permeation preventing portion (440) being configured to protect opposite side surfaces of the terminal unit (20) and opposite side surfaces of the connection busbar (300).

6. The battery pack according to claim 5, wherein the pollutant permeation preventing portion (440) is coupled to a space between the busbar (510) and the terminal unit (20) and the connection busbar (300) connected thereto.

7. The battery pack according to claim 1, wherein the thermal insulation cover (800) comprises:
an upper end cover (810) provided at an upper part of the battery pack at which the busbar assembly (500) and the blocking structure (400) are located; and
a side cover (820) provided at a different submodule (100) facing portion of the busbar assembly (500).

8. The battery pack according to claim 1, wherein the thermal insulation cover (800) comprises a thermal insulation material.

9. The battery pack according to claim 8, wherein the thermal insulation material comprises silicate.

10. The battery pack according to claim 9, wherein the thermal insulation material comprises mica or ceramics.

11. The battery pack according to claim 7, wherein the thermal insulation cover (800) is configured to cover the entirety of the connection busbar (300).

12. The battery pack according to claim 7, wherein the thermal insulation cover (800) further comprises a rear cover (840) provided parallel to the side cover (820), the rear cover (840) being configured to protect the connection busbar (300) and a rear surface of the blocking structure (400).

13. A device using the battery pack according to any one of claims 1 to 12 as an energy source.

14. The device according to claim 13, wherein the device is any one selected from a group consisting of a mobile phone, a tablet computer, a laptop computer, a power tool, a wearable electronic device, an electric vehicle, a hybrid electric vehicle, a plug-in hybrid electric vehicle, and an energy storage system.

## Patentansprüche

1. Batteriepack, umfassend:
zwei oder mehr Teilmodule (100), wobei jedes der zwei oder mehr Teilmodule (100) eine Mehrzahl von Einheitszellen aufweist, wobei jede aus der Mehrzahl von Einheitszellen eine Elektrodenanordnung und eine Elektrodenleitung umfasst, welche von der Elektrodenanordnung hervorsteht;
ein Packgehäuse (600), welches dazu eingerichtet ist, die Teilmodule (100) aufzunehmen;
eine Sammelschienenanordnung (500), welche eine Sammelschiene (510), welche dazu eingerichtet ist, die Elektrodenleitungen der Teilmodule (100) elektrisch miteinander zu verbinden, und einen Sammelschienenrahmen (520) umfasst, welcher mit der Sammelschiene (510) verbunden ist;
eine Verbindungssammelschiene (300), welche dazu eingerichtet ist, die Teilmodule (100) miteinander zu verbinden;
eine Anschlusseinheit (20), welche eine Ansammlung der Elektrodenleitungen umfasst, welche mittels der Sammelschiene (510) elektrisch miteinander verbunden sind, wobei die Anschlusseinheit (20) als der Abschnitt der Ansammlung von Elektrodenleitungen definiert ist, welche aus dem Packgehäuse (600) exponiert sind, wobei die Anschlusseinheit (20) elektrisch mit der Verbindungssammelschiene (300) verbunden ist;
eine Blockierstruktur (400), welche dazu eingerichtet ist, die Anschlusseinheit (20), wenigstens einen Abschnitt der Sammelschienenanordnung (500) und ein oberes Ende sowie eine Seitenfläche der Verbindungssammelschiene (300) an einem Abschnitt davon zu umwickeln, welcher mit der Anschlusseinheit (20) verbunden ist, und
eine thermische Isolierabdeckung (800), welche dazu eingerichtet ist, die Blockierstruktur (400) zu schützen.

2. Batteriepack nach Anspruch 1, wobei die Blockierstruktur (400) ein Isoliermaterial umfasst, welches einen chemischen Widerstand und eine thermische Isolierung aufweist.

3. Batteriepack nach Anspruch 2, wobei das Isoliermaterial ein Silikat umfasst.

4. Batteriepack nach Anspruch 3, wobei das Isoliermaterial Glimmer oder keramische Materialien umfasst.

5. Batteriepack nach Anspruch 1, wobei die Blockierstruktur (400) umfasst:
eine obere Struktur (410), welche dazu eingerichtet ist, eine Form aufzuweisen, welche der Sammelschienenanordnung (500) entspricht, wobei die obere Struktur (410) an einem oberen Ende der Sammelschienenanordnung (500) angeordnet ist;
einen Anschluss-Schutzabschnitt (420), welcher von der oberen Struktur (410) hervorsteht, um eine Form aufzuweisen, welcher der Anschlusseinheit (20) und der Verbindungssammelschiene (300) entspricht;
eine seitliche Struktur (430), welche dazu eingerichtet ist, einen Abschnitt des Sammelschienenrahmens (520), welcher einem unterschiedlichen Teilmodul (100) zugewandt ist, weiter zu schützen; und
einen Schadstoffeindringung-Verhinderungsabschnitt (440), welcher an einem unteren Teil der oberen Struktur (410) angeordnet ist, wobei der Schadstoffeindringung-Verhinderungsabschnitt (440) dazu eingerichtet ist, entgegengesetzte Seitenflächen der Anschlusseinheit (20) und entgegengesetzte Seitenflächen der Verbindungssammelschiene (300) zu schützen.

6. Batteriepack nach Anspruch 5, wobei der Schadstoffeindringung-Verhinderungsabschnitt (440) mit einem Raum zwischen der Sammelschiene (510) und der Anschlusseinheit (20) und der Verbindungssammelschiene (300) gekoppelt ist, welche damit verbunden ist.

7. Batteriepack nach Anspruch 1, wobei die thermische Isolierabdeckung (800) umfasst:
eine obere Endabdeckung (810), welche an einem oberen Teil des Batteriepacks bereitgestellt ist, an welchem die Sammelschienenanordnung (500) und die Blockierstruktur (400) angeordnet sind; und
eine seitliche Abdeckung (820), welche an einem Abschnitt der Sammelschienenanordnung (500) bereitgestellt ist, welcher einem unterschiedlichen Teilmodul (100) zugewandt ist.

8. Batteriepack nach Anspruch 1, wobei die thermische Isolierabdeckung (800) ein thermisches Isoliermaterial umfasst.

9. Batteriepack nach Anspruch 8, wobei das thermische Isoliermaterial ein Silikat umfasst.

10. Batteriepack nach Anspruch 9, wobei das thermische Isoliermaterial Glimmer oder keramische Materialien umfasst.

11. Batteriepack nach Anspruch 7, wobei die thermische Isolierabdeckung (800) dazu eingerichtet ist, die gesamte Verbindungssammelschiene (300) abzudecken.

12. Batteriepack nach Anspruch 7, wobei die thermische Isolierabdeckung (800) ferner eine hintere Abdeckung (840) umfasst, welche parallel zu der seitlichen Abdeckung (820) bereitgestellt ist, wobei die hintere Abdeckung (840) dazu eingerichtet ist, die Verbindungssammelschiene (300) und eine hintere Fläche der Blockierstruktur (400) zu schützen.

13. Vorrichtung, welche den Batteriepack nach einem der Ansprüche 1 bis 12 als eine Energiequelle verwendet.

14. Vorrichtung nach Anspruch 13, wobei die Vorrichtung eine jegliche ist, ausgewählt aus der Gruppe, bestehend aus einem Mobiltelefon, einem Tabletcomputer, einem Laptopcomputer, einem Leistungswerkzeug, einer tragbaren elektronischen Vorrichtung, einem Elektrofahrzeug, einem hybriden Elektrofahrzeug, einem Plug-in hybriden Elektrofahrzeug und einem Energiespeichersystem.

## Revendications

1. Bloc-batterie comprenant :
deux sous-modules (100) ou plus, chacun des deux sous-modules (100) ou plus ayant une pluralité de cellules unitaires, chacune de la pluralité de cellules unitaires comprenant un ensemble électrode et un fil d'électrode faisant saillie à partir de l'ensemble électrode ;
un boîtier de bloc (600) configuré pour recevoir les sous-modules (100) ;
un ensemble barre-bus (500) comprenant une barre-bus (510) configurée pour connecter électriquement les fils d'électrode des sous-modules (100) les uns aux autres et un châssis de barre-bus (520) connecté à la barre-bus (510) ;
une barre-bus de connexion (300) configurée pour connecter les sous-modules (100) les uns aux autres ;
une unité borne (20) comprenant un groupe des fils d'électrode connectés électriquement les uns aux autres via la barre-bus (510), l'unité borne (20) étant définie comme la portion du groupe de fils d'électrode qui sont exposés à l'extérieur du boîtier de bloc (600), l'unité borne (20) étant connectée électriquement à la barre-bus de connexion (300) ;
une structure de blocage (400) configurée pour envelopper l'unité borne (20), au moins une portion de l'ensemble barre-bus (500) et une extrémité supérieure et une surface latérale de la barre-bus de connexion (300) au niveau d'une portion de celle-ci connectée à l'unité borne (20), et
un capot d'isolation thermique (800) configuré pour protéger la structure de blocage (400).

2. Bloc-batterie selon la revendication 1, dans lequel la structure de blocage (400) comprend un matériau d'isolation qui présente une résistance chimique et une isolation thermique.

3. Bloc-batterie selon la revendication 2, dans lequel le matériau d'isolation comprend du silicate.

4. Bloc-batterie selon la revendication 3, dans lequel le matériau d'isolation comprend du mica ou de la céramique.

5. Bloc-batterie selon la revendication 1, dans lequel la structure de blocage (400) comprend :
une structure supérieure (410) configurée pour avoir une forme correspondant à l'ensemble barre-bus (500), la structure supérieure (410) étant située à une extrémité supérieure de l'ensemble barre-bus (500) ;
une portion de protection de borne (420) faisant saillie à partir de la structure supérieure (410) de manière à avoir une forme correspondant à l'unité borne (20) et à la barre-bus de connexion (300) ;
une structure latérale (430) configurée pour protéger en outre une portion différente du châssis de barre-bus (520) faisant face à un sous-module (100) ; et
une portion de prévention de perméation de polluant (440) située au niveau d'une partie inférieure de la structure supérieure (410), la portion de prévention de perméation de polluant (440) étant configurée pour protéger des surfaces latérales opposées de l'unité borne (20) et des surfaces latérales opposées de la barre-bus de connexion (300).

6. Bloc-batterie selon la revendication 5, dans lequel la portion de prévention de perméation de polluant (440) est accouplée à un espace entre la barre-bus (510) et l'unité borne (20) et à la barre-bus de connexion (300) connectée à celle-ci.

7. Bloc-batterie selon la revendication 1, dans lequel le capot d'isolation thermique (800) comprend :
un capot d'extrémité supérieure (810) disposé au niveau d'une partie supérieure du bloc-batterie au niveau duquel l'ensemble barre-bus (500) et la structure de blocage (400) sont situés ; et
un capot latéral (820) disposé au niveau d'une portion différente de l'ensemble barre-bus (500) faisant face à un sous-module (100).

8. Bloc-batterie selon la revendication 1, dans lequel le capot d'isolation thermique (800) comprend un matériau d'isolation thermique.

9. Bloc-batterie selon la revendication 8, dans lequel le matériau d'isolation thermique comprend du silicate.

10. Bloc-batterie selon la revendication 9, dans lequel le matériau d'isolation thermique comprend du mica ou de la céramique.

11. Bloc-batterie selon la revendication 7, dans lequel le capot d'isolation thermique (800) est configuré pour recouvrir la totalité de la barre-bus de connexion (300).

12. Bloc-batterie selon la revendication 7, dans lequel le capot d'isolation thermique (800) comprend en outre un capot arrière (840) disposé parallèlement au capot latéral (820), le capot arrière (840) étant configuré pour protéger la barre-bus de connexion (300) et une surface arrière de la structure de blocage (400).

13. Dispositif utilisant le bloc-batterie selon l'une quelconque des revendications 1 à 12 en tant que source d'énergie.

14. Dispositif selon la revendication 13, dans lequel le dispositif est l'un quelconque choisi dans un groupe constitué d'un téléphone mobile, une tablette, un ordinateur portable, un outil électrique, un dispositif électronique à porter, un véhicule électrique, un véhicule électrique hybride, un véhicule électrique hybride rechargeable et un système de stockage d'énergie.
